# EUROPÄISCHE PATENTANMELDUNG

(11) **EP 4 421 312 A2**
(43) Veröffentlichungstag der Anmeldung: **28.08.2024**
(21) Anmeldenummer: 24181653.7
(22) Anmeldetag: 05.06.2020
(51) Int. Cl.: F03D 7/02

(54) **VERFAHREN ZUM STEUERN EINER WINDENERGIEANLAGE**

(30) Priorität: 12.06.2019 DE 102019115943
(62) Teilanmeldung aus: 20732169.6
(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Steuern einer Windenergieanlage (100) zum Einspeisen elektrischer Leistung in ein elektrisches Versorgungsnetz (120), und das Verfahren umfasst die Schritte Steuern der Windenergieanlage (100) so, dass in einem Normalbetrieb in Abhängigkeit des Windes eine elektrische Einspeiseleistung in das elektrische Versorgungsnetz (120) eingespeist wird, Verändern der elektrischen Einspeiseleistung in Abhängigkeit eines Netzzustands (f_{N}) und/oder einer Netzanforderung (ΔP_{S}) des elektrischen Versorgungsnetzes (120), wobei das Verändern der elektrischen Einspeiseleistung so geführt wird, dass eine vorgebbare mechanische, insbesondere momentane Belastungsgrenze der Windenergieanlage (100) eingehalten wird, wobei zur Steuerung des Generators (302) ein Generator-Regelkreis gebildet wird, der wenigstens den Generator (302) und die Leistungseinheit (310) umfasst, für den Generator-Regelkreis eine Regelungsdynamik vorgegeben wird, und in dem Generator-Regelkreis eine Eigenschaft oder ein Verhalten des elektrischen Versorgungsnetzes (120) beinhaltet ist, insbesondere eine Eigenfrequenz und/oder eine Schwingung des elektrischen Versorgungsnetzes (120).

## Beschreibung

Die vorliegende Erfindung betrifft ein Verfahren zum Steuern einer Windenergieanlage. Die vorliegende Erfindung betrifft auch eine Windenergieanlage. Die vorliegende Erfindung betrifft zudem einen Windpark mit mehreren Windenergieanlagen.

Windenergieanlagen sind bekannt, sie erzeugen elektrischen Leistung aus Wind und speisen diese in ein elektrisches Versorgungsnetz ein. Dadurch können Windenergieanlagen einen Beitrag zur Energieversorgung liefern, sie werden aber auch zunehmend für Aufgaben der Stützung des elektrischen Versorgungsnetzes eingesetzt. Dabei ist besonders zu beachten, dass Windenergieanlagen unter allen einspeisenden Erzeugern mit am schnellsten geregelt werden können. Damit können sie besonders für schnelle und kurzfristige Änderungen der Leistungseinspeisung herangezogen werden.

Diese guten Eigenschaften von Windenergieanlagen wurden zunehmend erkannt und werden zunehmend auch zur Netzstützung eingesetzt. Neben der schnellen Regelungseignung von Windenergieanlagen können Windenergieanlagen solche Stützaufgaben, besonders eine schnelle Leistungserhöhung oder Leistungsverringerung aber nicht in beliebiger Höhe und/oder beliebig kurzer Zeit ausführen. Besonders ist zu beachten, dass Windenergieanlagen dauerhaft, also wenn ihnen kein entsprechender Speicher zugeordnet ist, nur so viel Leistung in das elektrische Versorgungsnetz einspeisen können, wie aufgrund des vorherrschenden Windes und natürlich der Auslegung der Windenergieanlage möglich ist.

Aus diesem Grund ist es bekannt, Windenergieanlagen gezielt gedrosselt zu betreiben, um ihre Leistungseinspeisung bei Bedarf um den gedrosselten Leistungswert erhöhen zu können.

Abgesehen davon, dass durch ein solches Verfahren aus dem Wind erzeugbare Energie verschenkt wird, berücksichtigt ein solches Verfahren aber auch nicht, dass die von der Windenergieanlage einzuspeisende Leistung nicht ohne eine Belastung der Windenergieanlage verändert werden kann. Besonders schnelle Leistungswechsel können eine Belastung der Windenergieanlage darstellen, die ungünstig ist und sich bspw. auf die Lebensdauer der Windenergieanlage ungünstig auswirken kann. Mit anderen Worten kann eine solche Belastung zu einer Verkürzung der Lebensdauer der Windenergieanlage führen. Zwar gibt es Vorschläge, demnach eine solche Verringerung der Lebensdauer abgeschätzt werden kann, verhindert wird eine solche Lebensdauerreduzierung dadurch allerdings nicht.

Das Deutsche Patent- und Markenamt hat in der Prioritätsanmeldung zur vorliegenden Anmeldung folgenden Stand der Technik recherchiert: DE 10 2017 112 936 A1, US 2017/0 328 342 A1, EP 2 354 541 A1, HEIER, Siegfried: Windkraftanlagen: Systemauslegung, Integration und Regelung, 3. überarbeitete und erweiterte Auflage, Wiesbaden: Vieweg+Teubner, 2003, S. 431-434 & 456-462. - ISBN 978-3-663-07668-1, DE 10 2009 059 669 A1, DE 10 2011 100 981 A1, US 2009 / 0 230 681 A1 und DE 10 2016 120 700 A1.

Der Erfindung liegt somit die Aufgabe zugrunde, zumindest eines der genannten Probleme zu adressieren. Insbesondere soll eine Lösung vorgeschlagen werden, die eine Belastung der Windenergieanlage, die aus Anforderungen zur Netzstützung entsteht, begrenzt oder reduziert. Zumindest soll zu bisher bekannten Lösungen eine alternative Lösung vorgeschlagen werden.

Erfindungsgemäß wird ein Verfahren nach Anspruch 1 vorgeschlagen.

Demnach wird ein Verfahren zum Steuern einer Windenergieanlage vorgeschlagen. Dabei wird von einer Windenergieanlage ausgegangen, die zum Einspeisen elektrischer Leistung in ein elektrisches Versorgungsnetz vorgesehen ist und einen Turm mit darauf drehbar angeordneter Gondel aufweist. Zudem weist die Windenergieanlage einen durch Wind antreibbaren aerodynamischen Rotor auf, und einen mit dem aerodynamischen Rotor gekoppelten Generator zum Erzeugen elektrischer Leistung aus Wind. Dazu ist auch eine Leistungseinheit vorgesehen zum Ansteuern des Generators zum Steuern einer von dem Generator abgegebenen elektrischen Leistung.

Der Generator wird, direkt oder indirekt, von dem aerodynamischen Rotor angetrieben, um dadurch elektrische Leistung aus Wind zu erzeugen. Weiterhin ist eine Leistungseinheit vorgesehen, zum Ansteuern des Generators zum Steuern einer vom Generator abgegebenen elektrischen Leistung. Somit kann über die Leistungseinheit die vom Generator abgegebene elektrische Leistung gesteuert werden. Dazu kann besonders ein aktiver Gleichrichter vorgesehen sein, der somit den Statorstrom des Generators gleichrichtet, ihn gleichzeitig aber auch steuert. Durch die Steuerung des Statorstroms kann somit auch die Windenergieanlage gesteuert werden. Zumindest kann dadurch eine Abgabeleistung der Windenergieanlage gesteuert werden.

Außerdem ist noch eine Einspeiseeinheit zum Einspeisen der vom Generator abgegebenen elektrischen Leistung oder eines Teils davon in das elektrische Versorgungsnetz vorgesehen.

Von diesen Elementen einer Windenergieanlage geht die vorliegende Erfindung somit aus. Darauf aufbauend umfasst das Verfahren folgende Schritte.

Die Windenergieanlage wird so gesteuert, dass in einem Normalbetrieb in Abhängigkeit des Windes eine elektrische Einspeiseleistung in das elektrische Versorgungsnetz eingespeist wird. Ein Normalbetrieb ist insoweit einer, bei dem keinerlei Netzstützanforderungen abgerufen werden. Somit speist die Windenergieanlage im sog. Netzparallelbetrieb ein, in dem sie also so viel Leistung einspeist, wie aufgrund des vorherrschenden Windes und natürlich der Auslegung der Windenergieanlage möglich ist.

Weiter wird vorgeschlagen, dass die elektrische Einspeiseleistung in Abhängigkeit eines Netzzustandes oder einer Netzanforderung des elektrischen Versorgungsnetzes verändert wird. Bspw. kann vorgesehen sein, dass die Einspeiseleistung mit zunehmender Netzfrequenz reduziert wird, jedenfalls sobald die Netzfrequenz einen vorbestimmten Grenzwert überschritten hat. In diesem Fall wird die elektrische Einspeiseleistung in Abhängigkeit eines Netzzustandes verändert. Soweit diese frequenzabhängige Leistungsreduzierung eine Vorschrift des elektrischen Versorgungsnetzes ist, wird somit die elektrische Einspeiseleistung auch in Abhängigkeit einer zumindest indirekten Netzanforderung verändert.

Es kommt aber auch in Betracht, dass eine aktuelle und konkrete Netzanforderung erfüllt werden muss, demnach bspw. das elektrische Versorgungsnetz bzw. sein Betreiber ausdrücklich die Reduzierung der eingespeisten Leistung um einen Prozentsatz fordert.

Dazu wird nun weiter vorgeschlagen, dass das Verändern der elektrischen Einspeiseleistung so geführt wird, dass eine vorgebbare mechanische, insbesondere momentane, Belastungsgrenze der Windenergieanlage eingehalten wird. Die Windenergieanlage setzt also eine geforderte Änderung der eingespeisten Leistung, sei es nun abhängig eines Netzzustandes, oder abhängig einer konkreten Anforderung zur Leistungsänderung, nicht unmittelbar um, sondern führt das Verändern der elektrischen Einspeiseleistung. Das Verändern der elektrischen Einspeiseleistung wird dabei so geführt, dass die vorgebbare mechanische Belastungsgrenze der Windenergieanlage eingehalten wird. Eine solche mechanische Belastungsgrenze kann auch ein Satz mehrerer Einzelbelastungsgrenzen sein oder umfassen.

Hier liegt besonders der Gedanke zugrunde, dass bspw. eine sprunghafte Erhöhung der eingespeisten Leistung nur möglich ist durch eine sprunghafte Erhöhung des Drehmomentes. Dabei kommt es nicht zu sehr darauf an, ob tatsächlich unmittelbar das Drehmoment erhöht wurde, oder die vom Generator abgegebene bzw. abgenommene Leistung sich sprunghaft erhöht, was eine sprunghafte Erhöhung des Drehmomentes zur Folge hat.

Jedenfalls kann die Begrenzung der vorgebbaren mechanischen Leistung besonders dadurch erfolgen, dass eine jeweilige Leistungsanforderung nicht ungeprüft oder ungefiltert an die Windenergieanlage, insbesondere an den Generator, zur Umsetzung weitergegeben wird. Besonders im Fall eines gewünschten Leistungssprungs, der also von dem elektrischen Versorgungsnetz gewünscht ist, wird dieser etwas abgeschwächt zur Umsetzung an den Generator weitergegeben. Bspw. kommt die Verwendung einer Begrenzung auf eine Flanke für die Veränderung der Leistung in Betracht, oder eine solche Leistungsanforderung kann über einen dynamischen Filter geführt werden. Ein solcher dynamischer Filter kann in einem einfachen Fall ein Filter mit einem einfachen Tiefpassverhalten sein, wie bspw. ein Verzögerungsglied erster Ordnung oder zweiter Ordnung.

Dadurch kann durch eine einfache Überprüfung der Filterung des vorgegebenen Änderungswertes der Leistung ein Leistungssprung und eine damit einhergehende Belastung der Windenergieanlage vermieden werden.

Es ist zu beachten, dass eine ungehinderte Weitergabe einer sprunghaften Leistungsänderung, um bei diesem Beispiel zu bleiben, zu einer sprunghaften Veränderung des Generatormoments führen kann und das führt unmittelbar zu einer mechanischen Belastung des Generators. Eine solche mechanische Belastung des Generators strahlt dann möglicherweise ebenfalls aus auf die Rotorblätter des Rotors der Windenergieanlage. Auch kann ein solcher Drehmomentsprung Auswirkung auf die Aufnahme des Generators an einem Maschinenträger der Windenergieanlage haben.

Für eine solche unerwünschte Belastung, die nun erfindungsgemäß vermieden wird, kommen aber auch andere Leistungsänderungen als der beispielhaft genannte Leistungssprung in Betracht, wie bspw. nicht sprunghafte, dennoch sehr schnelle Änderungen der Leistung.

Welche Drehmoment- und/oder Leistungsänderungen zu welchen mechanischen Belastungen, oder zu welcher mechanischen Belastungshöhe führen, kann vorab in Simulationen aufgenommen werden. Es kommen aber auch Messungen vor Ort in Betracht, bei denen solche schnellen Leistungsänderungen und/oder Drehmomentänderungen durchgeführt werden. Die resultierende Belastung kann bspw. durch Dehnungsmessstreifen an den Rotorblättern oder durch Dehnungsmessstreifen an anderen belasteten Elementen, wie bspw. der Rotornabe, aufgenommen werden. Vorzugsweise wird darauf geachtet, dass nur wenige solcher Messungen und damit wenige dafür benötigter Anregungen entsprechender Belastungen durchgeführt werden. Alternativ kann eine solche Messung mit sehr geringen Belastungswerten durchgeführt werden und dann von dieser geringen Belastung auf eine entsprechend hohe Belastung hoch gerechnet werden, insbesondere extrapoliert werden.

Es ist zu betonen, dass sich der Vorschlag auf die Veränderung der elektrischen Einspeiseleistung konzentriert. Es wird also geprüft, inwieweit die Veränderung der elektrischen Einspeiseleistung zu einer mechanischen Belastung führt und entsprechend wird dann das Verändern der elektrischen Einspeiseleistung so durchgeführt, insbesondere mit einer solch schwachen Änderungen pro Zeit durchgeführt, dass die vorgebbare mechanische Belastungsgrenze eingehalten wird. Die vorgebbare mechanische Belastungsgrenze kann auch als vorgegebene mechanische Belastungsgrenze bezeichnet werden.

Gemäß einer Ausführungsform wird vorgeschlagen, dass zum Verändern der Einspeiseleistung wenigstens ein Grenzgradient vorgegeben wird. Ein solcher Grenzgradient ist eine dem Betrage nach maximale zeitliche Veränderung eines Leistungswertes, besonders eines Leistungswertes einer vom Generator erzeugten elektrischen Leistung. Der Grenzgradient kann auch eine dem Betrage nach maximale zeitliche Veränderung eines zu steuernden Generatormomentes sein. Graphisch veranschaulichend bildet ein solcher Grenzgradient somit eine mit der Zeit aufsteigende Flanke, die von der entsprechenden Leistung bzw. dem entsprechenden Generatormoment nicht überschritten werden darf, und eine abfallende Flanke, die von der entsprechenden Leistung bzw. dem zu steuernden Generatormoment nicht unterschritten werden darf. Somit wird vorgeschlagen, die entsprechende Leistung bzw. das entsprechende Generatormoment hinsichtlich ihres Verlaufs nicht vorzugeben, aber hinsichtlich ihres Verlaufs zu begrenzen.

Insoweit also die Veränderung der elektrischen Einspeiseleistung in Abhängigkeit des Netzzustandes bzw. in Abhängigkeit der Netzanforderung zu einer Veränderung der Leistung bzw. zu einer Veränderung des Generatormomentes führt, die den Grenzgradienten dem Betrage nach nicht überschreitet, ergibt sich keine Änderung. Sofern aber die Veränderung der elektrischen Einspeiseleistung eine dem Betrage nach höhere Änderung fordern würde, so würde der Grenzgradient erreicht werden und dadurch die Veränderung begrenzt werden. Im Ergebnis wird dadurch erreicht, dass keine zu starken und schnellen Änderungen an den Generator weitergegeben werden und somit keine zu starken schnellen Änderungen umgesetzt werden. Eine mechanische Belastungsgrenze der Windenergieanlage wird dadurch eingehalten.

Durch die bereits genannten Vorabuntersuchungen, die einen Zusammenhang zwischen Leistungsänderungen und resultierenden Belastungen bestimmen können, kann somit die mechanische Belastung vorgegeben werden und aufgrund des aufgenommenen Zusammenhangs ein entsprechender Grenzgradient gewählt werden.

Vorzugsweise sind die Grenzgradienten variabel. Besonders können sie situationsabhängig vorgegeben werden. Bspw. kann eine Windenergieanlage im Teillastbetrieb, wenn der Wind also so schwach ist, dass die Windenergieanlage ihre Nennleistung nicht erreichen kann, durch eine Veränderung der Einspeiseleistung ggf. nur schwächer mechanisch belastet werden, als eine Windenergieanlage, die im Volllastbetrieb einspeist, die also bei entsprechend stärkerem Wind betrieben wird.

Vorzugsweise kann der Grenzgradient auch für ein und denselben Vorgang variiert werden, indem ganz am Anfang ein starker Anstieg zugelassen wird, der aber bspw. bereits wenige Sekunden später, also bspw. 3, 4 oder 5 Sekunden später, reduziert werden kann. Dem liegt der Gedanke zugrunde, dass eine anfängliche kurze schnelle Leistungserhöhung zu einer noch zulässigen mechanischen Belastung führt, wohingegen die zusätzliche mechanische Belastung aber überschritten werden würde, wenn weiterhin eine entsprechend starke Änderung der Einspeiseleistung zugelassen werden würde.

Es kommt auch in Betracht, dass sich eine mechanische Belastung erst durch eine Schwingung ergibt. Auch eine solche Schwingung kann durch Vorgabe eines entsprechenden Grenzgradienten verhindert werden. Insoweit ist zu beachten, dass eine Begrenzung der Leistungsänderung oder einer Generatormomentänderung eine nichtlineare Funktion ist. Die Wirkung hängt somit von der Amplitude ab. Je nach begrenzter Amplitude kann das ggf. zu Schwingungen kommen und umgekehrt können solche Schwingungen durch eine entsprechende Vorgabe des Grenzgradienten verhindert werden. Auch hier kommt in Betracht durch Vorabuntersuchungen wie Simulationen zu prüfen, durch welche Grenzgradienten solche oder andere Schwingungen verhindert oder begrenzt werden können.

Gemäß einer Ausführungsform wird vorgeschlagen, dass ein Generatormoment des Generators über einen Drehmomentsollwert gesteuert wird, wobei der Drehmomentsollwert über ein Filterglied geführt wird, zur Schwingungsminderung und/oder zum Vermeiden einer Schwingungsanregung des Generators, wobei das Filterglied insbesondere als Tiefpassfilter und/oder als Verzögerungsglied ausgeführt ist, insbesondere als ein lineares Verzögerungsglied ersten oder zweiter Ordnung.

Insoweit wird eine spezielle Vorfilterung für die Ansteuerung des Generators vorgeschlagen. Ein solches Filterglied kann auch als Vorsteuerung bezeichnet werden. Das Filterglied verhindert, dass ein Sollwertsprung des Drehmomentsollwertes unmittelbar bei der Generatorsteuerung zur Umsetzung kommt. Dadurch kann besonders auch ein Ruck im Generator vermieden werden, der eine Schwingung im Generator anregen könnte. Das Filterglied vermeidet einen solchen Ruck und damit vermeidet es eine solche Schwingungsanregung oder kann auch zur Schwingungsminderung dienen.

Durch die Verwendung eines Tiefpassfilters werden somit besonders höhere Frequenzen aus dem Drehmomentsollwert herausgenommen. Besonders die Verwendung eines linearen Tiefpassfilters, wie ein lineares Verzögerungsglied erster oder zweiter Ordnung, ermöglicht eine dynamische Betrachtung, insbesondere auch eine Betrachtung im Frequenzbereich. Dadurch können gezielt Eigenwerte oder eine Resonanzfrequenz des Generators berücksichtigt werden.

Die Verwendung eines Grenzgradienten und eines Filterglieds, das synonym auch als Filter bezeichnet werden kann, können auch kombiniert werden. Insbesondere kann eine solche Kombination so aussehen, dass zunächst durch den Grenzgradienten eine Begrenzung der Leistung und/oder des Generatormoments vorgenommen wird und anschließend das so begrenzte Signal weiter verarbeitet wird. Das so begrenzte Signal kann bereits eine Begrenzung eines Drehmomentsollwertes darstellen und dann als solches über das Filterglied geführt werden. Oder das begrenzte Signal kann, besonders wenn es eine Leistung betrifft, erst in ein Drehmomentsollwert überführt werden und der dabei resultierende Drehmomentsollwert kann über das Filterglied gegeben werden.

Gemäß einer Ausführungsform wird vorgeschlagen, dass das Verändern der elektrischen Einspeiseleistung so gesteuert wird, dass auf ein, ein dem Betrage nach vorbestimmten Drehmomentgrenzwert übersteigendes Generatormoment, ein weiteres, dem vorbestimmten Drehmomentgrenzwert übersteigendes Generatormoment für einen vorbestimmten Erholungszeitraum unterdrückt oder auf den Drehmomentgrenzwert begrenzt wird. Somit wird zunächst ein überhöhtes Generatormoment zugelassen. Erfolgt dann ein weiteres den Drehmomentgrenzwert übersteigendes Generatormoment, wird dies nicht mehr zugelassen. Je nach Situation kann das bedeuten, dass es generell nicht zugelassen wird, vorzugsweise wird es aber auf den Drehmomentgrenzwert begrenzt. Das erfolgt vorzugsweise für 5 bis 30 Sekunden. Vorzugsweise wird das den vorbestimmten Drehmomentgrenzwert übersteigende Generatormoment auch noch für einen vorbestimmten Zeitraum zugelassen und dieser Zeitraum kann dem Erholungszeitraum entsprechen.

Es wurde aber erkannt, dass das zugrundeliegende Problem darin bestehen kann, dass sich der Generator und die sich dahinter befindende mechanische Struktur durch mehrere große Generatormomente in Folge aufschwingen kann. Insoweit besteht grundsätzlich nicht das Problem, dass das Generatormoment dauerhaft zu groß ist. Hierbei ist auch zu beachten, dass ein solches, hohes Generatormoment, das auch synonym als Generatordrehmoment bezeichnet werden kann, besonders durch eine Leistungsveränderung auftritt.

Besonders kann ein solch hohes Generatormoment auftreten, wenn dadurch Schwungenergie, also kinetische Energie aus dem Rotor der Windenergieanlage entnommen werden soll. Tritt hierbei ein großes Generatormoment auf, bedeutet das, dass der Generator auch stark abgebremst wird. Würde dieses große Generatormoment also für eine lange Dauer auftreten, bspw. für eine Minute, so kann dies zu einem so starken Abbremsen des Generators und damit Rotors der Windenergieanlage führen, dass diese zum Stehen kommen kann. Eine solche Situation ist auch ungünstig und meist unerwünscht, eine hohe mechanische Belastung besteht dann allerdings nicht mehr.

Die vorliegende Erfindung betrifft allerdings die Reduzierung oder Begrenzung einer mechanischen Belastung und die kann, um bei dem genannten Beispiel zu bleiben, besonders dadurch auftreten, dass kurzfristig und kurzzeitig kinetische Energie durch ein entsprechend hohes Generatormoment aus dem Rotor der Windenergieanlage entnommen wird, bspw. für 5 Sekunden. Das kann bspw. dann der Fall sein, wenn die Frequenz im elektrischen Versorgungsnetz schwankt und die Windenergieanlage dem durch kurzfristig erhöhte Leistungseinspeisung entgegenwirken will.

Ist also das Generatormoment für einen kurzen Moment, wie die beispielhaft genannten 5 Sekunden, sehr hoch gewesen, so kann angenommen werden, dass in den folgenden 5 Sekunden aufgrund der Frequenzschwingung im elektrischen Versorgungsnetz keine zusätzliche Energie angefragt wird und das Generatormoment entsprechend wieder abgefallen ist. Ebenfalls 5 Sekunden später, um bei obigen Beispiel zu bleiben, kann dann erneut eine hohe Leistungsanforderung entstehen, mit einem entsprechenden resultierenden hohen Generatormoment. Es ergeben sich also potenziell im 5 Sekundenwechsel starke Drehmomentwechsel. Je nach Frequenz dieser starken Drehmomentwechsel können sie zu einem Aufschwingen des Generators bzw. des Generatorrotorsystems führen. Um das zu vermeiden, ist der genannte Erholungszeitraum vorgesehen. Dadurch wird eine schnelle Abfolge hoher Generatormomente vermieden.

Gemäß einer weiteren Ausführungsform wird vorgeschlagen, dass das Verändern der elektrischen Einspeiseleistung so gesteuert wird, dass bei einer abklingenden Schwingung des Generatormoments mit einer maximalen Amplitude, die den vorbestimmten Amplitudengrenzwert übersteigt, ein weiterer Generatordrehmomentimpuls mit wenigstens einer halben Amplitude des Amplitudengrenzwertes vermieden wird. Wenn also das Generatormoment schwingt, was mit einem mechanischen Schwingen des Generators und Rotors einhergehen kann, werden etwaige weitere Generatordrehmomentimpulse unterdrück. Sind diese Generatordrehmomentimpulse klein, nämlich kleiner als halb so groß wie die Amplitude des Amplitudengrenzwertes, so kann auf diese Unterdrückung verzichtet werden.

Dadurch kann verhindert werden, dass eine solche abklingende und damit aber noch vorhandene Schwingung des Generatormomentes doch wieder angeregt wird. Dazu wird vorgeschlagen, dass diese Unterdrückung solcher, weiterer Generatordrehmomentimpulse solange durchgeführt wird, bis die abklingende Schwingung auf eine Amplitude abgeklungen ist, die unter einem vorbestimmten Amplitudenabklingwert liegt. Dieser Amplitudenabklingwert wird vorzugsweise kleiner als 25 % des Amplitudengrenzwertes gewählt.

Es liegt also allenfalls noch eine Schwingung mit einer Amplitude von einem Viertel des Amplitudengrenzwertes vor und bei einem solchen kleinen Wert von einem Viertel kann davon ausgegangen werden, dass die Schwingung als im Wesentlichen abgeklungen gilt.

Alternativ kann auch eine Abklingdauer gewählt werden, so dass also das Unterdrücken weiterer Generatordrehmomentimpulse mit entsprechender Höhe nur so lange durchgeführt wird, bis eine vorbestimmte Abklingdauer vergangen ist. Eine solche Abklingdauer liegt vorzugsweise im Bereich von 5 bis 30 Sekunden. Hier wurde erkannt, dass - je nach Generator - eine Generatorschwingung abgeklungen ist, was selbst bei Generatoren geringer Schwingfrequenz bei 30 Sekunden anzunehmen ist. Natürlich kann je nach Generator auch eine andere Abklingdauer gewählt werden.

Gemäß einer Ausführungsform wird vorgeschlagen, dass zur Steuerung des Generators ein Generator-Regelkreis gebildet wird, der wenigstens den Generator und die Leistungseinheit umfasst. Weiter wird vorgeschlagen, dass für den Generator-Regelkreis eine Regelungsdynamik vorgegeben wird, insbesondere Eigenwerte und/oder Polstellen, und die Vorgabe der Regelungsdynamik, insbesondere der Eigenwerte bzw. Polstellen, so erfolgt, dass die vorgebbare mechanische Belastungsgrenze der Windenergieanlage eingehalten werden kann.

Bei Verwendung eines so ausgestalteten Generator-Regelkreises kann somit das Drehmoment als Sollwert vorgegeben werden und insoweit die Eingangsgröße für den Regelkreis bilden. Davon wird der aktuelle Ist-Wert des Drehmomentwertes abgezogen und die resultierende Regeldifferenz über einen Regler gegeben, dessen Dynamik vorgegeben werden kann, bzw. über den die Dynamik des Regelkreises vorgegeben werden kann.

Das Ergebnis eines solchen Reglers kann dann eine Stellgröße sein. Die Stellgröße kann an die Leistungseinheit zur Umsetzung gegeben werden. Die Stellgröße kann bspw. ein einzustellender Erregerstrom sein, wenn der Generator als fremderregter Synchrongenerator ausgebildet ist. Über diesen Erregerstrom kann das Generatordrehmoment eingestellt, zumindest grundlegend verändert werden.

Dies ist aber nur ein, besonders anschauliches Beispiel. Gemäß einem anderen Beispiel kann das Einstellen des Generatordrehmomentes über einen aktiven Gleichrichter erfolgen. Der aktive Gleichrichter kann dazu den vom Generator abgegebenen Statorstrom steuern und darüber die vom Generator abgegebene Leistung. Dadurch kann wiederum das Generatordrehmoment eingestellt werden.

Mit dem Generatorregelkreis kann auch eine Leistung des Generators, nämlich seine Abgabeleistung, unmittelbar eingestellt werde. In diesem Fall liegt also ein Sollwert für die Abgabeleistung vor, der einzustellen ist. Dieser kann mit einem Ist-Wert der Abgabeleistung, also Generatorleistung, verglichen werden und die sich ergebende Regeldifferenz kann über den Regler gegeben werden, der daraus eine Stellgröße berechnet und diese zur Umsetzung an die Leistungseinheit gibt.

Somit wurde also erkannt, dass über diesen Generator-Regelkreis eine solche Dynamik vorgegeben werden kann, die auch eine mechanische Belastung beeinflussen kann und dadurch eine mechanische Überlastung verhindern kann. Besonders kann über die Parametrierung dieses Generator-Regelkreises die Steuerung des Generators so langsam gemacht werden, dass zu hohe Generatormomente und damit zu hohe mechanische Belastungen vermieden werden.

Auch die Verwendung eines solchen Generator-Regelkreises kann mit dem Vorschlag der Grenzgradienten und/oder dem Vorschlag des vorgeschalteten Filterglieds kombiniert werden. Ggf. ist die Parametrierung des Generator-Regelkreises daran anzupassen.

Gemäß einer Ausführungsform wird vorgeschlagen, dass in dem Generator-Regelkreis mechanische Elemente beinhaltet bzw. mechanische Eigenschaften berücksichtigt sind, nämlich der aerodynamische Rotor, insbesondere sein Trägheitsmoment, und/oder wenigstens eine Blatteigenfrequenz und außerdem oder alternativ der Turm mit der Gondel, insbesondere wenigstens eine Eigenfrequenz einer Schwingung des Turms mit der Gondel.

Somit wird vorgeschlagen, dass diese Dynamiken, die sich aus den mechanischen Eigenschaften ergeben, in dem Generator-Regelkreis Berücksichtigung finden. Die Berücksichtigung spiegelt sich besonders in der Parametrierung des Regelkreises wieder. Besonders ist bekannt, dass sowohl der aerodynamische Rotor, als auch die Rotorblätter, als auch das Zusammenspiel zwischen Turm und Gondel jeweils eine Eigenfrequenz und/oder entsprechenden konjugiert komplexe Eigenwerte aufweisen können. Solche Eigenschaften können bekannt sein oder in Simulationen ermittelt werden. Diese Eigenschaften können dann in den Generator-Regelkreis einfließen, besonders in die Parametrierung des Generator-Regelkreises.

Gemäß einer Ausführungsform wird vorgeschlagen, dass in dem Generator-Regelkreis eine Eigenschaft oder ein Verhalten des elektrischen Versorgungsnetzes beinhaltet ist, insbesondere dass eine Eigenfrequenz und/oder eine Schwingung des elektrischen Versorgungsnetzes beinhaltet ist. Eine Eigenschaft, insbesondere eine Eigenfrequenz des elektrischen Versorgungsnetzes ist somit eine generelle Eigenschaft, die zu einer Schwingung führen kann, aber nicht führen muss. Führt sie zu einer Schwingung, ist die zugehörige Frequenz dabei bekannt. Diese Frequenz ist auch für die Frage ihrer Anregung von Bedeutung und genau dazu wird vorgeschlagen, das in dem Generator-Regelkreis zu berücksichtigen.

Außerdem oder alternativ kann ein aktuelles Verhalten, insbesondere eine aktuell vorhandene Schwingung des elektrischen Versorgungsnetzes erfasst werden und unmittelbar im Regelkreis dann seine Berücksichtigung finden. In diesem Fall könnte der Regelkreis adaptiv ausgebildet sein, um ein solches aktuelles Verhalten, insbesondere eine aktuelle Frequenz einer Schwingung zu berücksichtigen. Alternativ kann der Regelkreis derart robust ausgelegt werden, dass er ein Spektrum möglicher Frequenzen abdecken kann. Ein solches Spektrum kann das Ergebnis von Erfahrungswerten sein.

Gemäß einer Ausführungsform wird vorgeschlagen, dass ein mechanisches Modell der Windenergieanlage bei der Veränderung der elektrischen Einspeisung berücksichtigt wird, um das Verändern der elektrischen Einspeisung so zu führen, dass eine vorgebbare, insbesondere momentane mechanische Belastungsgrenze der Windenergieanlage, eingehalten werden kann. Besonders bevorzugt wird vorgeschlagen, dass das mechanische Modell in dem Generatorregelkreis enthalten ist oder dort zumindest berücksichtigt wird.

Ein solches, mechanisches Modell moduliert besonders Zusammenhänge zwischen mechanischen Bewegungen, mechanischen Verbiegungen und mechanischen Kräften, bildet diese also ab. Hierzu gehört vorzugsweise die Modulierung eines Zusammenhangs zwischen auftretendem Generatormoment, das somit auch auf den Rotor wirkt, und der resultierenden Bewegung des Rotors und auch weiterer auftretender Kräfte am Rotor. So kann es ein Beschleunigungsverhalten des Rotors abhängig eines solchen Drehmomentes beinhalten, einschließlich einer resultierenden Verbiegung der Rotorblätter, den daraus resultierenden Kräften an den Rotorblättern und insbesondere am Pitchlager, an dem die Rotorblätter an der Nabe des Rotors befestigt sind, und mögliche auftretende Schwingungen.

Ist also bspw. geplant, die elektrische Einspeiseleistung zu erhöhen, kann abgeleitet werden, wie sich dafür das Generatormoment erhöht. Dieses Generatormoment, oder seine zu erwartende Erhöhung kann dann eine Eingangsgröße für das mechanische Modell bilden und davon abhängig kann erkannt werden, welche mechanische Belastungen zu erwarten sind. Diese können dann mit der vorgebbaren mechanischen Belastungsgrenze verglichen werden und davon abhängig kann bei Bedarf die Veränderung der elektrischen Einspeiseleistung angepasst, also insbesondere bei Bedarf verringert oder verlangsamt werden.

Eine solche Berücksichtigung kann dadurch erfolgen, dass das mechanische Modell in dem Generatorregelkreis enthalten ist. Bspw. kann eine mechanische Belastung, die durch das mechanische Modell erkannt wird, über eine Steuervorschrift eine Reglerverstärkung in dem Generatorregelkreis verändern. Dafür kann das mechanische Modell unmittelbar in den Generatorregelkreis eingebunden sein. Es kann aber bspw. auch eine Berücksichtigung des mechanischen Modells in dem Generatorregelkreis dadurch erfolgen, dass die Eingangsgröße des Generatorregelkreises, also der Sollwert für das Generatormoment bzw. der Sollwert für die einzustellende Generatorleistung, abhängig des mechanischen Modells angepasst wird.

Gemäß einer Ausführungsform wird vorgeschlagen, dass ein Schwingungserfassungsmittel vorgesehen ist, zum Erfassen wenigstens einer Schwingung der Windenergieanlage, besonders zum Erfassen mechanischer Schwingungen und/oder Schwingungen des Generators, wobei die wenigstens eine erfasste Schwingung dazu verwendet wird, die Veränderung der elektrischen Einspeiseleistung so zu führen, dass die vorgebbare mechanische Belastungsgrenzte der Windenergieanlage eingehalten werden kann.

Somit wird hier als eine Variante vorgeschlagen, dass mechanische Schwingungen und/oder Schwingungen des Generators unmittelbar erfasst werden. Hier stehen mechanische Schwingungen der Windenergieanlage und/oder Schwingungen des Generators im Vordergrund. Mechanische Schwingungen der Windenergieanlage können besonders auch Schwingungen des Rotors, besonders in Drehrichtung sein. Solche können bspw. durch Elastizitäten der Rotorblätter hervorgerufen werden. Es kommen aber auch Schwingungen in Längsrichtung einer Rotordrehachse und damit Generatordrehachse in Betracht. Auch solche Schwingungen können durch Leistungsänderungen und damit Laständerungen hervorgerufen werden.

Ebenfalls wird vorgeschlagen, Schwingungen des Generators zu erfassen. Solche Generatorschwingungen können auch mechanische Schwingungen sein. Es kommt aber auch in Betracht, dass eine Drehmomentschwingung erfasst wird, die elektrisch erfasst werden kann. Eine solche Drehmomentschwingung führt dann allerdings regelmäßig auch zu einer mechanischen Schwingung. Besonders wird hier vorgeschlagen, das Verfahren für eine getriebelose Windenergieanlage zu verwenden. In diesem Fall wirken Schwingungen des Generators unmittelbar, nämlich ohne Zwischenschaltung eines Getriebes, auch auf den Rotor und ebenso wirken Schwingungen des Rotors auf den Generator.

Ein Schwingungserfassungsmittel kann bspw. ein Beschleunigungssensor sein, der besonders, aber nicht nur, Schwingungen des Rotors und damit der Gondel der Windenergieanlage in Längsrichtung der Rotorachse erfassen kann. Es kommen auch Dehnungsmessstreifen in Betracht, die Schwingungen aufgrund von Dehnungen am Turm der Windenergieanlage erfassen können und/oder die bei entsprechender Anbringung Schwingungen der Rotorblätter erkennen können, wenn sie bspw. an einem Wurzelbereich der Rotorblätter angeordnet sind. Eine Schwingungsmessung kann auch über einen Rotorlagesensor erfasst werden, wenn ein zeitlicher Verlauf der so erfassten Rotorlage, die auch als Drehposition des Rotors bezeichnet werden kann, ausgewertet wird.

Drehmomentschwingungen des Generators können entweder aus der Steuerung der Windenergieanlage abgeleitet werden, die regelmäßig Kenntnis über die aktuelle Abgabeleistung des Generators hat. Schwingungen des Drehmomentes können aber auch durch einen konkreten Stromsensor als Schwingungserfassungsmittel erfasst werden. Auch das ist nur ein weiteres Beispiel für ein Schwingungserfassungsmittel. Als weiteres Beispiel kommen auch optische Sensoren in Betracht, die Bewegungen von Elementen aufnehmen können.

Gemäß einer Ausführungsform wird vorgeschlagen, dass zum Steuern des Generators, insbesondere zum Steuern über einen Drehmomentsollwert, ein Begrenzungsfilter vorgesehen ist, um ein Steuersignal, insbesondere nämlich den Drehmomentsollwert, in einem vorgegebenen Frequenzbereich auf eine vorbestimmte Grenzamplitude zu begrenzen.

Vorzugsweise wird dabei die Grenzamplitude als frequenzabhängiger Amplitudenverlauf vorgegeben. Hier liegt besonders der Gedanke zugrunde, dass bereits Zusammenhänge zwischen dem Drehmoment des Generators und resultierender mechanischer Belastungen bekannt sind. Solche Zusammenhänge können vorab durch Messungen oder durch Simulationen erfasst werden. Hierbei kann auch der vorgegebene Frequenzbereich definiert und entsprechend vorgegeben werden, also auch die zugehörige Grenzamplitude, die dadurch vorbestimmt werden kann. Dann kann durch dieses Begrenzungsfilter auf einfache und insbesondere auch schnelle Art und Weise die Einhaltung der vorgebbar mechanischen Belastungsgrenze erreicht werden. Besonders bedarf es bei diesem Vorschlag keiner Rückführung von Messungen.

Besonders bei den Vorabuntersuchungen, seien sie nun an einem echten System oder mittels Simulationen, kann auch dem Grunde nach und auch quantitativ eine Frequenzabhängigkeit erkannt und aufgenommen werden. Demnach kann die Grenzamplitude je nach Frequenz unterschiedlich ausfallen. Ein frequenzabhängiger Amplitudenverlauf kann sich dabei besonders auch auf die Anwendung bspw. eines Sprungsignals als Drehmomentsollwert beziehen. Ein solches Sprungsignal setzt sich nach der Lehre von Fourier aus verschiedenen Frequenzanteilen zusammen und genau das kann durch die Vorgabe eines frequenzabhängigen Amplitudenverlaufs berücksichtigt werden. Ggf. kommt in Betracht, dass eine solche Grenzamplitude als entsprechende frequenzabhängige Funktion oder frequenzabhängiges Begrenzungssystem ausgebildet ist. Hier kommt besonders ein entsprechender frequenzabhängiger Filter in Betracht.

Vorzugsweise weist die Windenergieanlage einen Synchrongenerator auf, wobei sie insbesondere getriebelos ausgestaltet ist. Außerdem ist vorgesehen, dass die Leistungseinheit einen Gleichrichter und einen Hochsetzsteller aufweist, oder dass sie einen gesteuerten Gleichrichter aufweist. Wenn sie einen gesteuerten Gleichrichter aufweist, ist der Hochsetzsteller entbehrlich.

Für diese Verwendung eines Synchrongenerators ist nun vorgesehen, dass zum Ansteuern des Generators zum Steuern der vom Generator abgegebenen Leistung bzw. zum Steuern des Generatordrehmoments der Hochsetzsteller oder der gesteuerte Gleichrichter verwendet werden. Sowohl mit dem Hochsetzsteller als auch dem gesteuerten Gleichrichter kann jeweils ein Statorstrom des Generators gesteuert werden. Dieser Statorstrom ist insoweit ein Abgabestrom des Synchrongenerators.

Durch die Steuerung dieses Statorstroms kann somit die Abgabeleistung des Synchrongenerators gesteuert werden. Bei entsprechender Umrechnung und Berücksichtigung der Drehzahl des Läufers des Generators kann ebenso ein Drehmoment aus dem Statorstrom abgeleitet werden bzw. über den Statorstrom ein Drehmoment des Generators eingestellt werden. Das Generatormoment kann somit wie gewünscht vorgegeben werden und damit auch ein auf den Rotor wirkendes Drehmoment.

Bei einer bevorzugt verwendeten getriebelosen Windenergieanlage kann somit unmittelbar das Drehmoment des Rotors vorgegeben werden. Besonders wenn das Rotormoment hinsichtlich der vorgebbaren mechanischen Belastungsgrenze eine kritische Größe ist, kann somit über diese Ansteuerung des Synchrongenerators eine entsprechende Belastung unmittelbar beeinflusst und ggf. eingestellt und begrenzt werden. Auch wenn andere Elemente oder weitere Elemente hinsichtlich der vorgebbaren mechanischen Belastungsgrenze relevant sind, wie bspw. eine Biegung und/oder Schwingung der Rotorblätter, kann auch dies über das Steuern der vom Generator abgegebenen elektrischen Leistung oder des Generatormomentes über die genannte Leistungseinheit gut beeinflusst werden.

Vorzugsweise ist der Synchrongenerator als fremderregter Synchrongenerator ausgebildet und die Leistungseinheit umfasst dann einen Erregersteller, insbesondere einen Gleichstromsteller, um damit einen Erregerstrom des Synchrongenerators zu steuern. Dadurch kann die Erregung des Synchrongenerators gesteuert werden und damit ist eine Steuerung des Generatormomentes gut durchführbar. Damit kann auch die abgegebene elektrische Leistung des Generators gesteuert werden. Entsprechend erhält die Leistungseinheit dadurch eine gute und insbesondere weitere Möglichkeit, die Leistung und/oder des Generatormomentes einzustellen und damit die mechanische Belastung zu beeinflussen.

Erfindungsgemäß wird auch eine Windenergieanlage vorgeschlagen, die zum Einspeisen elektrischer Leistung in ein elektrisches Versorgungsnetz ausgebildet ist. Sie umfasst
- einen Turm mit darauf drehbar angeordneter Gondel,
- einen durch Wind antreibbaren aerodynamischen Rotor,
- einen mit dem aerodynamischen Rotor gekoppelten Generator zum Erzeugen elektrischer Leistung aus Wind,
- eine Leistungseinheit zum Ansteuern des Generators zum Steuern einer vom Generator abgegebenen elektrischen Leistung und/oder zum Steuern eines Generatordrehmomentes und
- eine Einspeiseeinheit zum Einspeisen der vom Generator abgegebenen elektrischen Leistung oder eines Teils davon in das elektrische Versorgungsnetz,
- eine Steuereinheit zum Steuern der Windenergieanlage so, dass in einem Normalbetrieb in Abhängigkeit des Windes eine elektrische Einspeiseleistung in das elektrische Versorgungsnetz eingespeist wird, wobei die Steuereinheit dazu vorbereitet ist,
- ein Verändern der elektrischen Einspeiseleistung in Abhängigkeit eines Netzzustands und/oder einer Netzanforderung des elektrischen Versorgungsnetzes zu steuern, wobei
- das Verändern der elektrischen Einspeiseleistung so geführt wird, dass eine vorgebbare mechanische, insbesondere momentane Belastungsgrenze der Windenergieanlage eingehalten wird, wobei
- zur Steuerung des Generators (302) ein Generator-Regelkreis gebildet wird, der wenigstens den Generator (302) und die Leistungseinheit (310) umfasst,
- für den Generator-Regelkreis eine Regelungsdynamik vorgegeben wird, und
in dem Generator-Regelkreis eine Eigenschaft oder ein Verhalten des elektrischen Versorgungsnetzes (120) beinhaltet ist, insbesondere eine Eigenfrequenz und/oder eine Schwingung des elektrischen Versorgungsnetzes (120).

Die Windenergieanlage ist somit so ausgebildet, wie dies bereits vorstehend im Zusammenhang mit dem erfindungsgemäßen Verfahren zum Steuern einer Windenergieanlage erläutert wurde.

Die Steuereinheit der Windenergieanlage kann besonders als Prozessrechner ausgebildet sein und dabei besonders mit der Leistungseinheit und der Einspeiseeinheit gekoppelt sein. Vorzugsweise steuert die Steuereinheit insoweit sowohl die Leistungseinheit als auch die Einspeiseeinheit. Es kommt aber auch zumindest teilweise in Betracht, dass die Einspeiseeinheit indirekt durch die Leistungseinheit gesteuert wird.

Eine solche Steuerung kann so ausgebildet sein, dass die Leistungseinheit durch das Steuern der vom Generator abgegebenen elektrischen Leistung oder indirekt durch das Steuern des Generatormomentes, auch eine Leistungszufuhr und über die Zeit eine Energiezufuhr zur Einspeiseeinheit steuert. Ein Teil der Steuerung der Einspeiseeinheit kann dann so ausgestaltet sein, dass die Einspeiseeinheit abhängig von der Leistung oder Energie, die sie von der Leistungseinheit bzw. durch die Steuerung der Leistungseinheit erhält, das Einspeisen in das elektrische Versorgungsnetz steuert.

Die Steuereinheit kann außerdem mit einer Erfassungseinheit zum Erfassen wenigstens eines Netzzustandes verbunden sein. Besonders kann hier die Spannung im elektrischen Versorgungsnetz bzw. eine dazu repräsentative Spannung am Ausgang der Einspeiseeinheit erfasst werden und zusätzlich der eingespeiste Strom und/oder die eingespeiste Leistung.

Das Erfassen der Spannung des elektrischen Versorgungsnetzes umfasst dabei neben einer Spannungsamplitude auch eine Frequenz der elektrischen Spannung. Außerdem wird eine Phasenlage erfasst, insbesondere eine Phasenlage der elektrischen Spannung in Bezug auf den eingespeisten elektrischen Strom. Daraus kann auch ein eingespeister Blindleistungsanteil abgeleitet werden. Aus diesen Werten, besonders der erfassten Netzfrequenz und/oder einer Änderung der Netzfrequenz, kann auch ein Änderungsbedarf der in das elektrische Versorgungsnetz einzuspeisende Leistung abgeleitet werden.

Dieser Änderungsbedarf kann dann in der Steuereinheit ausgewertet werden und davon abhängig kann wieder das Ansteuern des Generators gesteuert werden, nämlich über ein Steuern der Leistungseinheit. Die Steuereinheit kann Informationen über den Netzzustand und im Übrigen auch von der Einspeiseeinheit erhalten, wenn diese die genannten Netzgrößen bzw. Netzzustände oder einen Teil davon erfassen.

Die Steuereinheit kann auch die vorgebbare mechanische Belastungsgrenze beinhalten. Diese kann also in der Steuereinheit vorgegeben sein. Soweit diese abhängig einer Vorschrift und/oder abhängig von Eingangsgrößen vorgegeben wird, kann eine solche Vorgabe auch in der Steuereinheit durchgeführt werden. Dabei kann die mechanische Belastungsgrenze dort auch berechnet oder anderweitig bestimmt werden. Für absolute Werte der vorgebbaren mechanischen Belastungsgrenze kommt auch in Betracht, dass diese vorab in der Steuereinheit hinterlegt sind, insbesondere werksseitig. Dennoch kommt auch in Betracht, dass diese gelegentlich erneuert werden.

Gemäß einer Ausführungsform ist vorgesehen, dass die Windenergieanlage, insbesondere die Steuereinheit, dazu vorbereitet ist, ein Verfahren zum Steuern einer Windenergieanlage gemäß wenigstens einer vorstehend beschriebenen Ausführungsform durchzuführen.

Dazu kann die Steuereinheit entsprechend ausgelegt sein. Zu einer solchen Auslegung können auch die genannten Verbindungen zwischen der Steuereinheit und der Leistungseinheit sowie der Einspeiseeinheit gehören. Auch eine Verbindung einer Messeinheit zum Aufnehmen von Netzzuständen, insbesondere elektrischen Größen des elektrischen Versorgungsnetzes, kann zu dieser Vorbereitung der Steuereinheit zum Ausführungen des genannten Verfahrens gehören.

Mittels eines mechanischen Modells der Windenergieanlage können mechanische Belastungen abgeschätzt werden, insbesondere vorab abgeschätzt werden. Auch dieses mechanische Modell kann so ausgebildet und eingesetzt sein, wie vorstehend im Zusammenhang mit Ausführungsformen des Verfahrens zum Steuern einer Windenergieanlage erläutert wurde.

Erfindungsgemäß wird auch ein Windpark mit mehreren Windenergieanlagen vorgeschlagen. Dabei ist vorgesehen, dass die Windenergieanlagen, zumindest einige von ihnen, gemäß wenigstens einer vorstehend beschriebenen Ausführungsform einer Windenergieanlage ausgebildet sind.

Hier kommt besonders in Betracht, dass die Windenergieanlagen zusammen an einem Netzanschlusspunkt in das elektrische Versorgungsnetz einspeisen und dabei diese insgesamt eingespeiste elektrische Einspeiseleistung in Abhängigkeit eines Netzzustandes und/oder einer Netzanforderung verändern, wobei dabei ein Verändern der elektrischen Einspeiseleistung jeder einzelnen Windenergieanlage so gesteuert wird, dass eine vorgebbare mechanische Belastungsgrenze jeder einzelnen Windenergieanlage eingehalten wird. Dadurch kann erreicht werden, dass die insgesamt am Netzanschlusspunkt eingespeiste Leistung besser in Abhängigkeit des Netzzustandes bzw. der Netzanforderung nachgeführt werden kann.

Gemäß einer Ausführungsform wird vorgeschlagen, dass der Windpark an einem Netzanschlusspunkt mit dem elektrischen Versorgungsnetz verbunden ist, um eine elektrische Parkleistung in das elektrische Versorgungsnetz einzuspeisen. Die elektrische Parkleistung ist im Wesentlichen die Summe aller elektrischen Einspeiseleistungen der Windenergieanlagen des Windparks in dem jeweiligen Moment.

Weiterhin ist für den Windpark eine zentrale Parksteuerung vorgesehen, um die Windenergieanlagen so zu koordinieren, dass die elektrische Parkleistung am Netzanschlusspunkt in das elektrische Versorgungsnetz eingespeist wird, insbesondere untere Berücksichtigung der jeweiligen vorgebbaren Belastungsgrenze jeder Windenergieanlage. Somit koordiniert die zentrale Parksteuerung die Windenergieanlagen jedenfalls hinsichtlich ihrer elektrischen Einspeiseleistung.

Dafür kann die zentrale Parksteuerung an jede Windenergieanlage einen individuellen Sollwert für die elektrische Einspeiseleistung geben. Die Windenergieanlage stellt dann die entsprechende elektrische Einspeiseleistung ein und die Summe aller dieser elektrischen Einspeiseleistungen ist dann im Wesentlichen die elektrische Parkleistung. Wird aber eine Veränderung der elektrischen Einspeiseleistung gefordert, oder ist eine solche Veränderung angekündigt, so kann jede Windenergieanlage an die zentrale Parksteuerung ein Signal zurücksenden, um der zentralen Parksteuerung eine Begrenzung der möglichen Veränderung der Einspeiseleistung anzuzeigen.

Die zentrale Parksteuerung kann dann abhängig davon die Aufteilung der elektrischen Parkleistung unter den Windenergieanlagen entsprechend anpassen, indem bspw. eine Windenergieanlage, die noch nicht an eine vorgebbare mechanische Belastungsgrenze stößt, einen Teil der Leistung übernimmt, die eine andere Windenergieanlage aufgrund einer mechanischen Belastungsgrenze in dem Moment nicht liefern kann.

Es kommt auch in Betracht, dass dann, wenn aufgrund der vorgebbaren mechanischen Belastungsgrenzen aller Windenergieanlagen eine gewünschte Veränderung der elektrischen Parkleistung nicht erzielbar ist, dass dann eine neue elektrische Parkleistung vorgegeben wird, die erzielt werden kann.

Dazu kommt in Betracht, dass gemäß einer Ausführungsform vorgeschlagen wird, dass die zentrale Parksteuerung an einen Netzbetreiber, der das elektrische Versorgungsnetz betreibt, eine Information dazu überträgt, inwieweit eine Veränderung der elektrischen Parkleistung umsetzbar ist. Das elektrische Versorgungsnetz bzw. sein Netzbetreiber kann sich dann auf diese Situation einstellen.

Die Erfindung wird nun nachfolgend anhand von Ausführungsbeispielen exemplarisch unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt eine Generatoransteuerung in einer schematischen Darstellung.

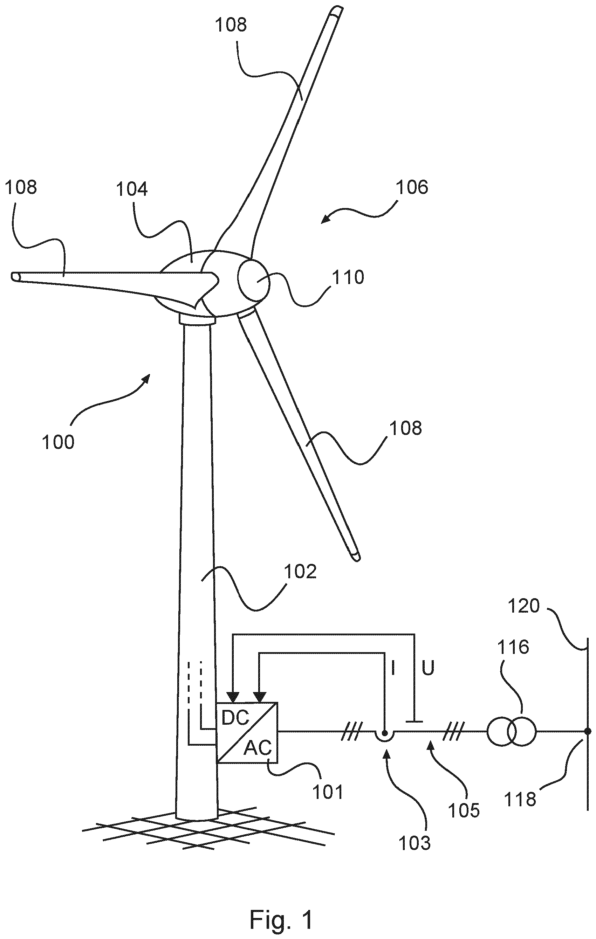

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Zudem ist eine Einspeiseeinheit 101 vorgesehen zum Einspeisen vom Generator abgegebener elektrischer Leistung in ein elektrisches Versorgungsnetz 120. Dazu gibt die Einspeiseeinheit einen dreiphasigen Wechselstrom aus, der über einen Netztransformator 116 an dem gemeinsamen Netzanschlusspunkt 118 in das elektrische Versorgungsnetz 120 eingespeist werden kann.

Zudem ist in der Figur 1 ein Stromaufnehmer 103 und ein Spannungsaufnehmer 105 angedeutet, die auch zusammen eine Messeinrichtung bilden können. Der somit erfassbare Strom und die somit erfassbare Spannung können als Eingangssignal für die Einspeiseeinheit 101 verwendet werden. Dadurch können auch Netzzuständen wie die Netzfrequenz oder die Netzspannung erfasst werden. Zum Erfassen der Netzspannung kann das Übertragungsverhalten des Netztransformator 116 berücksichtigt werden. Durch den Stromaufnehmer 103 und dem Spannungsaufnehmer 105 ist es auch möglich, die Phasenlage von Strom und Spannung zueinander zu erfassen und somit auch eingespeiste Wirkleistung und eingespeiste Blindleistung bzw. damit auch einen Leistungsfaktor zu erfassen. Diese Größen bilden Netzzustände. Diese Werte können somit zudem beim Einspeisen und auch beim Berücksichtigen vorgebbarer mechanischer Belastungsgrenzen verwendet werden.

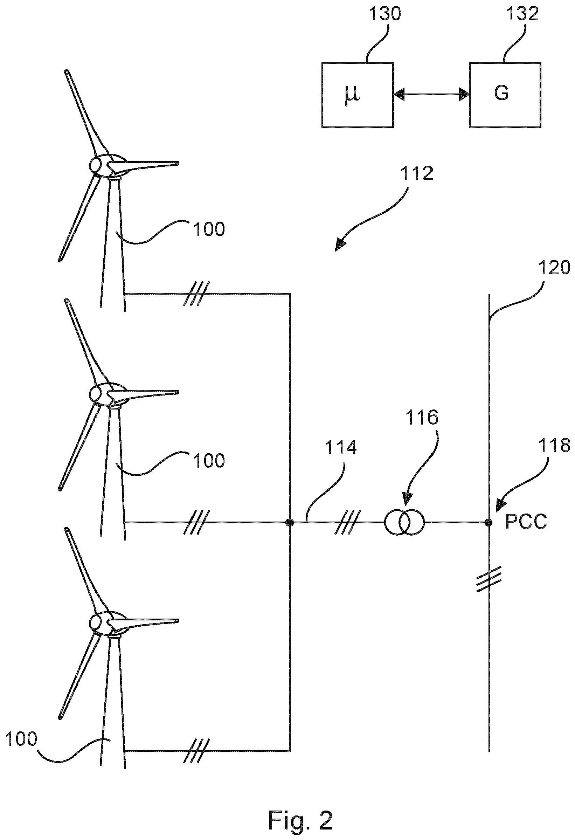

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem eine zentrale Parksteuerung 130 auf. Mit dieser zentralen Parksteuerung 130 können die Windenergieanlagen 100 koordiniert werden. Dazu besteht eine Kommunikation zwischen der zentralen Parksteuerung 130 und den Windenergieanlagen 100. Diese Kommunikation kann kabelgebunden oder auch drahtlos erfolgen. Der besseren Übersichtlichkeit halber sind keine Kommunikationsverbindungen zwischen der zentralen Parksteuerung 130 und den Windenergieanlagen 100 eingezeichnet.

Es kommt auch eine Kommunikation zwischen der zentralen Parksteuerung 130 und einem Netzbetreiber in Betracht. Eine solche Kommunikation kann mit einer Netzleitstelle 132 des Netzbetreibers erfolgen und das ist in Figur 2 angedeutet. Darüber kann der Netzbetreiber einen Bedarf einer Stützleistung anfordern und die zentrale Parksteuerung kann dem Netzbetreiber dazu zurückmelden, inwieweit und welcher Art der Bedarf gedeckt werden kann. Dabei kann bereits eine Beschränkung zum Einhalten einer vorgebbaren mechanischen Belastungsgrenze berücksichtigt werden. Somit kann der Netzbetreiber bereits unter Berücksichtigung einer solchen mechanischen Belastungsgrenze Informationen erhalten, inwieweit sein Bedarf durch den Windpark 112 gedeckt werden kann.

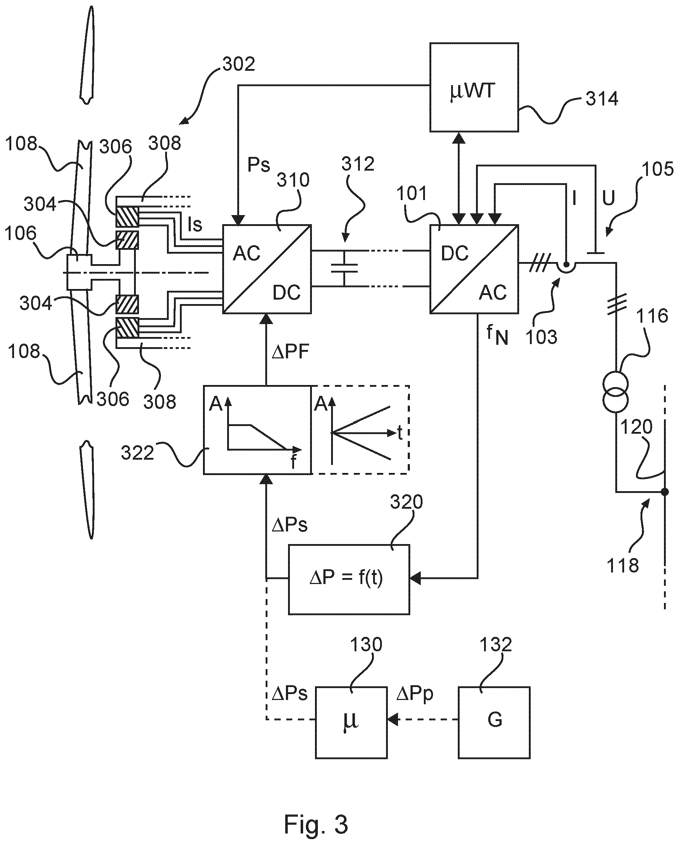

In Figur 3 ist schematisch eine Ansteuerung eines Synchrongenerators 302 dargestellt. Von dem Synchrongenerator 302 sind der Läufer 304 und der Stator 306 jeweils als ringförmige Bereiche ausgebildet. Die Figur 3 zeigt diese in einer angedeuteten Schnittdarstellung, so dass sie als schraffierte Bereiche gezeigt sind. Diese schraffierten Bereiche sind im Wesentlichen die magnetisch wirksamen Bereiche des Läufers 304 bzw. Stators 306.

Der Läufer 304 ist hier als innenliegender Läufer dargestellt, so dass der Synchrongenerator 302 als Innenläufer in diesem Beispiel ausgebildet ist, und als Ringgenerator. Der Läufer 304 ist dabei mit einem angedeuteten aerodynamischen Rotor 106 fest verbunden. Dieser aerodynamische Rotor 106 entspricht somit dem aerodynamischen Rotor 106 gemäß Figur 1 und weist entsprechend angedeutete Rotorblätter 108 auf.

Lediglich aus Gründen der Darstellung sind in Figur 3 nur zwei Rotorblätter 108 dargestellt. Der Einfachheit halber sind hier dieselben Bezugszeichen wie in Figur 1 gewählt worden, um anzudeuten, dass dies auch dieselben Elemente wie in Figur 1 sein können. Das Gleiche gilt für die weiteren Elemente der Figur 3, die dieselben Bezugszeichen wie in Figur 1 und/oder Figur 2 aufweisen. All diese Elemente können, auch wenn teilweise eine abweichende Art der Darstellung gewählt wurde, mit den entsprechenden Elementen der Figuren 1 oder 2 oder beiden übereinstimmen.

Der Synchrongenerator 302 kann somit in der Gondel 104 der Windenergieanlage 100 gemäß Figur 1 angeordnet sein. Der Stator 306 des Synchrongenerators 302 ist in dem gezeigten Beispiel sechsphasig ausgebildet, nämlich mit zwei dreiphasigen um 30 Grad zueinander versetzten Systemen. Der Stator 306 ist an einem Tragrahmen 308 befestigt, der nur angedeutet ist. Mittels dieses Tragrahmens 308 ist der Synchrongenerator 302 somit in einer Gondel wie der in Gondel 104 der Figur 1 befestigt, nämlich an einem Maschinenträger.

Der sechsphasige Statorstrom Is wird dann an einen aktiven Gleichrichter 310 gegeben. Der aktive Gleichrichter 310 richtet diesen sechsphasigen Statorstrom I_{S} gleich und erzeugt einen Gleichstrom mit einer Gleichspannung und gibt dies auf den Gleichspannungszwischenkreis 312. Der aktive Gleichrichter 310 kann dabei auch gezielt den Statorstrom Is steuern und dadurch auch ein Drehmoment des Synchrongenerators 302 steuern. Dafür kann der aktive Gleichrichter 310 einen Leistungssollwert Ps und optional einen in der Figur 3 nicht gezeigten Blindleistungssollwert Qₛ erhalten.

Die Leistungssollwerte Ps und ggf. Qₛ können bspw. von einer Steuereinheit 314 vorgegeben werden. Ein solcher Leistungssollwert Ps, der so von der Steuereinheit 314 vorgegeben wird, kann bspw. abhängig einer Drehzahl des aerodynamischen Rotors 106 entsprechend einer Drehzahl-Leistungs-Kurve vorgegeben werden. Das kann die Steuereinheit 314 entsprechend ausrechnen. Nur zur Vereinfachung der Darstellung ist insoweit eine Eingabe einer erfassten Drehzahl n in die Steuereinheit 314 nicht gezeigt. Im Übrigen kann aber die schematisch dargestellte Steuereinheit 314 ohnehin jegliche Steuerungen der Windenergieanlage vornehmen, oder einen Großteil der Steuerung der Windenergieanlage vornehmen und dabei dann einen solchen Drehzahlwert ohnehin vorliegen haben.

Somit wird über den Leistungssollwert Ps ein Betriebspunkt der Windenergieanlage eingestellt. In einer Sondersituation, die unten noch beschrieben wird, kann diese eingestellte Leistung zumindest kurzzeitig um eine Differenzleistung ΔP_{F} verändert werden. Insoweit ist in Figur 3 ΔP_{F} als weitere Eingangsgröße für den aktiven Gleichrichter 310 eingezeichnet.

Jedenfalls wird die Leistung bzw. Energie, die der aktive Gleichrichter 310 in den Gleichspannungszwischenkreis 312 eingegeben hat, von der Einspeiseeinheit 101 in einen dreiphasigen Wechselstrom mit einer dreiphasigen Wechselspannung umgewandelt und letztlich am gemeinsamen Netzanschluss 118 in das elektrische Versorgungsnetz 120 eingespeist.

Die schematisch gezeigte Einspeiseeinheit 101 kann die gemessenen Ströme und Spannungen, besonders, wie sie mit dem Stromaufnehmer 103 und dem Spannungsaufnehmer 105 aufgenommen wurden, verwenden, um Netzzustände des elektrischen Versorgungsnetzes 120 zu erfassen. Eine Möglichkeit ist, eine Netzfrequenz f_{N} als Netzzustand zu erfassen.

Es kann nun vorgesehen sein, dass abhängig der erfassten Netzfrequenz eine Stützleistung in das elektrische Versorgungsnetz eingespeist werden soll, nämlich zusätzlich zu der aktuellen Leistung, besonders zusätzlich zu der vorgegebenen Leistung Ps des aktuellen Arbeitspunktes. Besonders kommt hier in Betracht, dass für kurzfristige Frequenzeinbrüche der Netzfrequenz f_{N} schnell und auch nur für kurze Dauer eine Stützleistung in das elektrische Versorgungsnetz eingespeist werden soll. Eine kurze Dauer kann besonders im Bereich von 5 bis 30 Sekunden liegen. Eine solche Stützleistung kann im Bereich von 5 bis 20 Prozent der aktuellen abgegebenen Leistung des Synchrongenerators 302 liegen, also im Bereich von 5 bis 20 Prozent der Leistung Ps.

Eine solche zusätzliche Stützleistung ist dadurch von dem Synchrongenerator erzeugbar, dass dieser elektrisch abgebremst wird, wodurch kinetische Energie in elektrische Leistung umgewandelt wird. Dazu kann der aktive Gleichrichter 310 den Statorstrom Is entsprechend erhöhen. Ggf. kann ein Erregerstrom eingestellt werden. Dadurch erhöht sich auch das Generatormoment, was zu der besagten elektrischen Abbremsung des Rotors und dabei Erhöhung der erzeugten Leistung führt. Besonders wird hierbei der aerodynamische Rotor 106 aber auch der Läufer 304, der auch als elektrodynamischer Rotor bezeichnet werden kann, abgebremst. Ihre kinetische Energie wird also umgesetzt.

Es wurde nun erkannt, dass eine solche Stützleistung zwar sehr hilfreich sein kann, allerdings auch eine große Belastung mechanischer Art für die Windenergieanlage darstellen kann. Entsprechend wird vorgeschlagen, das Verändern der elektrischen Leistung, nämlich das Erhöhen der von dem Generator abgegebenen elektrischen Leistung, um die Differenzleistung ΔPf so zu führen, dass eine vorgebbare mechanische Belastungsgrenze der Windenergieanlage eingehalten wird. Eine Möglichkeit, das umzusetzen, wird in dieser Figur 3 erläutert.

Demnach gibt die Einspeiseeinheit 101 die Netzfrequenz f_{N} aus und übergibt diese an den Leistungsveränderungsblock 320. Dieser kann eine Funktion implementiert haben, die abhängig der Frequenz f, die hier als Netzfrequenz f_{N} eingegeben wird, eine Leistungsänderung bestimmt. Vereinfachend kann davon ausgegangen werden, dass der Leistungsveränderungsblock 320 auch die Netznennfrequenz, also die Frequenz, die das elektrische Versorgungsnetz haben sollte, also üblicherweise 50 Hz oder 60 Hz, kennt, nämlich implementiert oder abgespeichert hat. Dabei wird die implementierte Funktion üblicherweise so aussehen, dass dann, wenn die Frequenz der Nennfrequenz entspricht, die geforderte Leistungsänderung den Wert 0 beträgt.

Im erläuterten Beispiel wird aber davon ausgegangen, dass die Netzfrequenz f_{N} signifikant unter die Nennfrequenz abgesunken ist. Dann berechnet der Leistungsveränderungsblock 320 davon abhängig einen entsprechenden Differenzleistungssollwert ΔPs. Um diesen Leistungsänderungssollwert ΔPs soll die abgegebene Leistung des Synchrongenerators 302 erhöht werden. Dabei liegt der Gedanke zugrunde, dass Leistungsverluste vernachlässigbar sind und entsprechend diese erhöhte Leistung auch eingespeist wird, so dass die elektrische Einspeiseleistung in gleicher Weise verändert wird.

Um nun aber vorgebbare mechanische Belastungsgrenzen der Windenergieanlage einzuhalten, wird dieser Sollwert der Leistungsveränderung ΔPs nicht unmittelbar als Sollwert an den aktiven Gleichrichter 310 gegeben, sondern zunächst über ein Filterglied 322 geführt.

Es gibt verschiedene Möglichkeiten, wie dieses Filterglied 322 ausgeführt sein kann. In Figur 3 sind von diesen Möglichkeiten zwei graphisch angedeutet. Davon ist die linke Variante in einem durchgezogenen Block dargestellt und die rechte Variante in einem gestrichelten Bereich. Damit soll angedeutet werden, dass diese Varianten Alternativen sein können.

Die im linken Teil des Filterglieds 322 angedeutete Variante ist als Tiefpass ausgestaltet. Tiefe Frequenzen werden also durchgelassen und höhere Frequenzen umso stärker bedämpft, umso höher sie sind. Bei dem Sollwert der Leistungsänderung ΔPs kommt in Betracht, dass dieser Sollwert von dem Leistungsveränderungsblock 320 bei sich sehr schnell ändernder Netzfrequenz f_{N} als Sprungsollwert oder sprunghaft ansteigender Sollwert generiert werden kann. In diesem Fall entspricht die ansteigende Flanke eines solchen Sprungwertes einem hochfrequenten Signal bzw. hochfrequenten Anteil eines Signals und der angedeutete Tiefpassfilter würde somit eine solche steile Flanke entsprechend abschwächen.

Die rechts dargestellte Variante gibt einen maximalen Gradienten vor, nämlich für den Betrag der Änderung, so dass eine ansteigende positive Flanke und abfallende negative Flanke jeweils die Grenzen bilden. Der in dem Filterblock 322 eingegebene Sollwert wird somit auf diese Flanken begrenzt. Im Übrigen kann es natürlich weitere Varianten als diese beiden gezeigten Varianten des Tiefpassfilters und der begrenzten Gradienten geben. Auch eine Kombination kommt in Betracht.

Das Ergebnis des Filterglieds 322 ist eine gefilterte Leistungsänderung ΔP_{F}, die nun als Sollwert in den aktiven Gleichrichter 310 eingegeben wird. Durch das Filterglied 322 erhält der aktive Gleichrichter 310 somit kein starkes sprungförmiges Signal, so dass auch der Synchrongenerator 302 entsprechend nicht mehr so hart angesteuert werden kann.

Es kommt hier aber auch in Betracht, dass das Filterglied 322 zeitvariant ist bzw. zeitvariant gesteuert wird, um die jeweilige Filterfunktion zu verändern. Das gilt für die Variante des Tiefpassfilters genauso wie für die Variante der Grenzgradienten, also für andere Varianten.

Mit einer solchen Zeitabhängigkeit bzw. zeitabhängigen Steuerung kann besonders vorgesehen und realisiert werden, dass berücksichtigt wird, wie oft die Windenergieanlage, besonders der Synchrongenerator 302, bereits eine starke Belastung durch eine plötzliche Anforderung einer schnellen Leistungserhöhung aushalten musste. Es wurde nämlich erkannt, dass eine starke sprunghafte Erhöhung der Leistung, was mit einem sich entsprechend stark erhöhenden Generatormoment einhergeht, die Windenergieanlage nicht unmittelbar schädigt, aber im Falle einer Dauerbelastung kritisch sein kann und die Windenergieanlage schädigen kann.

Eine Dauerbelastung ist besonders eine solche, bei der in kurzen Abständen, wie bspw. in Minutenabständen, oder 5- bis 10-Sekundenabständen, solche Leistungserhöhungen angefordert werden. In diesem Fall kommt dann in Betracht, dass die erste solche Leistungserhöhung noch ungefiltert an den aktiven Gleichrichter 310 und damit im Ergebnis an den Synchrongenerator 302 weitergegeben wird. Kommt aber in kurzer Folge eine weitere solche Anforderung einer sprunghaften Leistungserhöhung, kann dann, oder erst ab einer vorbestimmten Anzahl in einem vorbestimmten Zeitraum, das Filterglied 322 seine Wirkung derart entfalten, dass ein solcher Leistungssprung nicht mehr durchgelassen wird.

Hier wurde besonders auch erkannt, dass viele solcher Leistungssprünge in kurzer Abfolge auch die Gefahr bilden, dass der Synchrongenerator 302 bzw. der Rotor 106 in Schwingung versetzt wird. Das kann durch das Filterglied 322 vermieden werden, wobei dafür eine erste sprunghafte Leistungsänderung ungefiltert weitergegeben werden kann.

Eine weitere Variante ist in Figur 3 gestrichelt dargestellt, demnach nämlich eine Leistungsänderung statt von einem gemessenen Netzzustand von einem Netzbetreiber vorgegeben wird. Das ist durch die Leitstelle 132 angedeutet, die der Leitstelle 132 der Figur 2 entsprechen kann. Diese Leitstelle kann bspw. eine Leistungsänderung ΔP_{P} einer Parkleistung anfordern. Die Netzleitstelle kann also anfordern, dass sich die insgesamt von einem Windpark, wie dem Windpark 112 der Figur 2, eingespeiste Parkleistung um diese Leistungsänderung der Parkleistung ΔP_{P} ändert.

Eine solche Anforderung einer geänderten Parkleistung kann an eine zentrale Parksteuerung 130, wie die in Figur 2 gezeigt hat, gegeben werden. Die zentrale Parksteuerung 130 kann dann diesen Sollwert einer Parkleistung in einen Sollwert einer geänderten Anlagenleistung umrechnen und ausgeben. Die zentrale Parksteuerung 130 erzeugt also einen Sollwert einer Leistungsänderung ΔPs und gibt diese in das Filterglied 322 ein. Das ersetzt dann die Vorgabe eines Sollwertes für eine Leistungsänderung ΔPs, die gemäß der ersten Variante von dem Leistungsveränderungsblock 320 erzeugt wurde. Ansonsten kann die Weiterverarbeitung dieses Leistungssollwertes in dem Filterglied 322 wie oben erläutert durchgeführt werden.

Somit wird eine Lösung vorgeschlagen, die eine Veränderung der Einspeiseleistung bei Berücksichtigung einer mechanischen Belastung schafft. Das Verändern der Einspeiseleistung kann sich aus einem Netzzustand ergeben, einschließlich einer Netzpendelung, die erfasst werden kann. Der Netzzustand, der grundsätzlich auch mehrere Elemente umfassen kann und insoweit auch synonym für mehrere Netzzustände steht, kann besonders von der Windenergieanlage oder einer Parksteuerung erfasst werden, oder über eine externe Schnittstelle eingegeben werden, z.B. von einem Netzbetreiber, der hierüber eine Leistungsänderung anfordern kann. Diese drei Möglichkeiten können auch als 3 Ebenen bezeichnet werden.

Besonders wird eine Lösung für einen Zugriff auf die Rotationsenergie des Rotors der Windenergieanlage zur Verbesserung der Netzeigenschaften vorgeschlagen.

Die Lösung betrifft somit die Nutzung des Rotationsspeichers besonders für örtliche Systemdienstleistungen. Das kann das Bereitstellen einer Regelleistung, eine Schwungmassennachbildung, eine Spannungseinprägung als auch eine ertragsoptimierte Gradientenbeschränkung beinhalten.

Es wurde erkannt, dass ein aktiver Gleichrichter sehr hohe Wirkleistungsgradienten am Generator ermöglicht und damit entsprechende Drehmomentengradienten realisieren kann. Dazu wird zur Begrenzung einer mechanischen Belastung eine entsprechende Begrenzung vorgeschlagen. Somit wird eine Reduktion bzw. Limitierung der Belastungen der mechanischen Struktur bei netzbedingten Leistungsgradienten vorgeschlagen.

Vorzugsweise ist eine dynamische Beschränkung der Wirkleistungsgradienten in Abhängigkeit der Belastung der mechanischen Struktur vorgesehen.

Es wurde besonders erkannt, dass der Zugriff auf die Rotationsenergie des Rotors durch einen aktiven Gleichrichter erfolgen kann, wodurch an der Rotorwelle hohe Drehmomentgradienten möglich werden. Dadurch sind hohe Belastungen der mechanischen Struktur möglich.

Durch neue Systemdienstleistungen kann eine Kopplung des mechanischen Schwingungssystems einer Windenergieanlage mit den Schwingungssystemen im Netz erfolgen. Dem wird durch die vorgeschlagene Lösung entgegengewirkt.

Besonders wird das Folgende vorgeschlagen:
Beschränken der Drehmomentengradienten oder des Drehmomentenverlaufs zur Vermeidung von mechanischem Stress oder Überschreitung von Maximallasten.

Besonders wird eine Gradientenbeschränkung vorgeschlagen, und/oder eine Verschiebung eines Anregungsspektrums durch eine Vergleichmäßigung des Drehmomentenverlaufs, z.B. durch einen Tiefpassfilter, besonders gemäß einem Verzögerungsglied erster oder zweiter Ordnung (PT1/PT2).

Ein Vorschlag ist die Vorgabe von Definitionen von einzuhaltenden Totzeiten nach Drehmomentenstößen. Eine Variante ist das Warten auf das Abklingen einer mechanischen Schwingung.

Ein weiterer grundsätzlicher Ansatz ist die Vermeidung von mechanischen Schwingungen. Dazu kann eine Berücksichtigung der Resonanzfrequenzen im mechanischen System bei der Regelung des Generatordrehmoments vorgeschlagen werden.

Auch das Ablegen der Polstellen in der verwendeten Regelung kommt in Betracht, demnach ein Abstand der Polstellen in der komplexen Ebene von der imaginären Achse eingestellt oder erhöht wird.

Bevorzugst erfolgt eine Abbildung des mechanischen Modells in der Regelung.

Eine Variante schlägt eine Erkennung der Schwingungen und Reaktion der Generatorregelung vor, um so regelungstechnisch auf solche Schwingungen reagieren zu können.

Auch eine Vermeidung jeglicher Anregungen über eine Vorgabe eines bestimmten Frequenzbereichs als Grenzkurve wird vorgeschlagen. Das kann auch von einer vorbestimmten Amplitude abhängen, oder die Amplitude wird als Grenzkurve vorgegeben.

Als Vorteile der vorgeschlagenen Lösungen ergibt sich besonders eine Vermeidung/Reduktion von mechanischem Stress bei einer Verbesserung der Netzeigenschaften im Vergleich zu Lösungen, die mechanische Belastungen nicht berücksichtigen.

Auch ist eine Entkopplung der Schwingungssysteme des elektrischen Versorgungsnetzes einerseits und der Windenergieanlage andererseits möglich. Das ist durch eine angepasste Generatorregelung erreichbar, die diese beiden Schwingungssysteme berücksichtigt.

Es wurde besonders erkannt, dass die mechanische Struktur bei einer Änderung des Generatormoments besonders auf die folgenden zwei Arten belastet werden kann.

Bei der ersten Belastungsart tritt eine absolute einmalige Belastung unmittelbar bei dem Drehmomentensprung auf. Das kann Auswirkungen haben auf eine Biegung des Turms der Windenergieanlage, auf eine Biegung der Rotorblätter, als auch auf Maximal- und Lebensdauerlasten.

Eine zweite Belastungsart ergibt sich aus einer zyklischen Drehomentenvariation. Daraus kann eine Anregung einer Resonanz im mechanischen System entstehen.

Dazu sind Resonanzfrequenzen des mechanischen Systems zu beachten. Eine erste Turmschwingung kann im Bereich von 0,25 Hz liegen. Eine zweite Turmschwingung kann im Bereich von 1 -3 Hz liegen.

Eine erste Blattfrequenz in Schlagrichtung kann im Bereich von 0,55 Hz liegen, und eine erste Blattfrequenz in Schwenkrichtung kann im Bereich von 0,75-0,9 Hz liegen.

Dazu wird vorgeschlagen, Frequenzen im elektrischen Versorgungsnetz zu berücksichtigen. Dazu wurde erkannt, dass so genannte Inter-Area-Oscillations, also Leistungsschwingungen zwischen Netzabschnitten, im Bereich von 0,2-0,8 Hz liegen können.

So genannte Power System Oscillations (PSO), also lokale Leistungsschwingungen, können Frequenzen ab 1 Hz aufweisen. Außerdem können so genannte subsynchrone Resonanzen (SSR), also Spannungsschwingungen mit Frequenzen unter Netzfrequenz, besonders im Bereich von 15 Hz liegen.

Erfindungsgemäß wird folgende Ausführungsform vorgeschlagen:
Verfahren zum Steuern einer Windenergieanlage (100) zum Einspeisen elektrischer Leistung in ein elektrisches Versorgungsnetz (120), und die Windenergieanlage (100) umfasst
- einen Turm (102) mit darauf drehbar angeordneter Gondel (104),
- einen durch Wind antreibbaren aerodynamischen Rotor (106),
- einen mit dem aerodynamischen Rotor (106) gekoppelten Generator (302) zum Erzeugen elektrischer Leistung aus Wind,
- eine Leistungseinheit (310) zum Ansteuern des Generators (302) zum Steuern einer vom Generator (302) abgegebenen elektrischen Leistung und/oder zum Steuern eines Generatordrehmomentes und
- eine Einspeiseeinheit (101) zum Einspeisen der vom Generator (302) abgegebenen elektrischen Leistung oder eines Teils davon in das elektrische Versorgungsnetz (120),
und das Verfahren umfasst die Schritte
- Steuern der Windenergieanlage (100) so, dass in einem Normalbetrieb in Abhängigkeit des Windes eine elektrische Einspeiseleistung in das elektrische Versorgungsnetz (120) eingespeist wird,
- Verändern der elektrischen Einspeiseleistung in Abhängigkeit eines Netzzustands (f_{N}) und/oder einer Netzanforderung (ΔPs) des elektrischen Versorgungsnetzes (120), wobei
- das Verändern der elektrischen Einspeiseleistung so geführt wird, dass eine vorgebbare mechanische, insbesondere momentane Belastungsgrenze der Windenergieanlage (100) eingehalten wird.

Diese Ausführungsform ist mit allen erwähnten Ausführungsformen kombinierbar, insbesondere mit den Ausführungsformen, die durch die Ansprüche definiert werden. Besonders ist sie auch mit folgender Ausführungsform kombinierbar, die auch mit den übrigen Ausführungsformen kombinierbar ist:
Verfahren, dadurch gekennzeichnet, dass
- zur Steuerung des Generators (302) ein Generator-Regelkreis gebildet wird, der wenigstens den Generator (302) und die Leistungseinheit (310) umfasst,
- für den Generator-Regelkreis eine Regelungsdynamik vorgegeben wird, insbesondere Eigenwerte und/oder Polstellen, und
- die Vorgabe der Regelungsdynamik, insbesondere der Eigenwerte bzw. Polstellen, so erfolgt, dass die vorgebbare mechanische Belastungsgrenze der Windenergieanlage eingehalten werden kann.

## Patentansprüche

1. Verfahren zum Steuern einer Windenergieanlage (100) zum Einspeisen elektrischer Leistung in ein elektrisches Versorgungsnetz (120), und die Windenergieanlage (100) umfasst
- einen Turm (102) mit darauf drehbar angeordneter Gondel (104),
- einen durch Wind antreibbaren aerodynamischen Rotor (106),
- einen mit dem aerodynamischen Rotor (106) gekoppelten Generator (302) zum Erzeugen elektrischer Leistung aus Wind,
- eine Leistungseinheit (310) zum Ansteuern des Generators (302) zum Steuern einer vom Generator (302) abgegebenen elektrischen Leistung und/oder zum Steuern eines Generatordrehmomentes und
- eine Einspeiseeinheit (101) zum Einspeisen der vom Generator (302) abgegebenen elektrischen Leistung oder eines Teils davon in das elektrische Versorgungsnetz (120),
und das Verfahren umfasst die Schritte
- Steuern der Windenergieanlage (100) so, dass in einem Normalbetrieb in Abhängigkeit des Windes eine elektrische Einspeiseleistung in das elektrische Versorgungsnetz (120) eingespeist wird,
- Verändern der elektrischen Einspeiseleistung in Abhängigkeit eines Netzzustands (f_{N}) und/oder einer Netzanforderung (ΔPs) des elektrischen Versorgungsnetzes (120), wobei
- das Verändern der elektrischen Einspeiseleistung so geführt wird, dass eine vorgebbare mechanische, insbesondere momentane Belastungsgrenze der Windenergieanlage (100) eingehalten wird, wobei
- zur Steuerung des Generators (302) ein Generator-Regelkreis gebildet wird, der wenigstens den Generator (302) und die Leistungseinheit (310) umfasst,
- für den Generator-Regelkreis eine Regelungsdynamik vorgegeben wird, und
- in dem Generator-Regelkreis eine Eigenschaft oder ein Verhalten des elektrischen Versorgungsnetzes (120) beinhaltet ist, insbesondere eine Eigenfrequenz und/oder eine Schwingung des elektrischen Versorgungsnetzes (120).

2. Verfahren nach Anspruch 1,
**dadurch gekennzeichnet, dass**
zum Verändern der Einspeiseleistung wenigstens ein Grenzgradient vorgegeben wird, wobei der Grenzgradient
- eine dem Betrage nach maximale zeitliche Veränderung eines Leistungswertes definiert, insbesondere für die vom Generator (302) erzeugte elektrische Leistung oder
- eine dem Betrage nach maximale zeitliche Veränderung eines zu steuernden Generatormomentes definiert.

3. Verfahren nach einem der Ansprüche 1 oder 2,
**dadurch gekennzeichnet, dass**
ein Generatormoment des Generators (302) über einen Drehmomentsollwert gesteuert wird, wobei der Drehmomentsollwert über ein Filterglied (322) geführt wird, zur Schwingungsminderung und/oder zum Vermeiden einer Schwingungsanregung des Generators (302), wobei das Filterglied (322) insbesondere als Tiefpassfilter und/oder als Verzögerungsglied ausgeführt ist, insbesondere als ein lineares Verzögerungsglied 1. oder 2. Ordnung.

4. Verfahren nach einem der vorstehenden Ansprüche,
**dadurch gekennzeichnet, dass**
das Verändern der elektrischen Einspeiseleistung so gesteuert wird, dass
- auf ein, einen dem Betrage nach vorbestimmten Drehmomentgrenzwert übersteigendes Generatormoment ein weiteres, den vorbestimmten Drehmomentgrenzwert übersteigendes Generatormoment für einen vorbestimmten Erholungszeitraum unterdrückt oder auf den Drehmomentgrenzwert begrenzt wird, insbesondere für 5 bis 30 Sekunden, und/oder
- bei einer abklingenden Schwingung des Generatormomentes mit einer maximalen Amplitude, die einen vorbestimmten Amplitudengrenzwert übersteigt, ein weiterer Generatordrehmomentimpuls mit wenigstens einer halben Amplitude des Amplitudengrenzwertes vermieden wird,
- bis die abklingende Schwingung auf eine Amplitude abgeklungen ist, die unter einem vorbestimmten Amplitudenabklingwert liegt, der insbesondere kleiner als 25% des Amplitudengrenzwerts gewählt wird, oder
- bis eine vorbestimmte Abklingdauer vergangen ist, die insbesondere im Bereich von 5 bis 30 Sekunden liegt.

5. Verfahren nach einem der vorstehenden Ansprüche,
**dadurch gekennzeichnet, dass**
- für den Generator-Regelkreis Eigenwerte und/oder Polstellen als Regelungsdynamik vorgegeben werden, und
- die Vorgabe der Regelungsdynamik, insbesondere der Eigenwerte bzw. Polstellen, so erfolgt, dass die vorgebbare mechanische Belastungsgrenze der Windenergieanlage eingehalten werden kann.

6. Verfahren nach einem der vorstehenden Ansprüche,
**dadurch gekennzeichnet, dass**
in einem bzw. dem Generator-Regelkreis mechanische Elemente beinhaltet bzw. mechanische Eigenschaften berücksichtigt sind, aus der Liste aufweisend:
- den aerodynamischen Rotor (106), insbesondere sein Trägheitsmoment und/oder wenigstens eine Blatteigenfrequenz, und
- den Turm (102) mit der Gondel (104), insbesondere wenigstens eine Eigenfrequenz einer Schwingung des Turms (102) mit der Gondel (104).

7. Verfahren nach einem der vorstehenden Ansprüche,
**dadurch gekennzeichnet, dass**
- ein mechanisches Modell der Windenergieanlage (100) bei der Veränderung der elektrischen Einspeiseleistung berücksichtigt wird, um das Verändern der elektrischen Einspeiseleistung so zu führen, dass eine vorgebbare, insbesondere momentane, mechanische Belastungsgrenze der Windenergieanlage (100) eingehalten werden kann, insbesondere dass
- das mechanische Modell in einem bzw. dem Generator-Regelkreis enthalten ist oder berücksichtigt wird.

8. Verfahren nach einem der vorstehenden Ansprüche,
**dadurch gekennzeichnet, dass**
- ein Schwingungserfassungsmittel vorgesehen ist, zum Erfassen wenigstens einer Schwingung der Windenergieanlage (100), besonders zum Erfassen mechanischer Schwingungen und/oder von Schwingungen des Generators (302), wobei
- die wenigstens eine erfasste Schwingung dazu verwendet wird, die Veränderung der elektrischen Einspeiseleistung so zu führen, dass die vorgebbare mechanische Belastungsgrenze der Windenergieanlage (100) eingehalten werden kann.

9. Verfahren nach einem der vorstehenden Ansprüche,
**dadurch gekennzeichnet, dass**
- zum Steuern des Generators (302), insbesondere über einen Drehmomentsollwert, ein Begrenzungsfilter (322) vorgesehen ist, um ein Steuersignal, insbesondere den Drehmomentensollwert, in einem vorgegebenen Frequenzbereich auf eine vorbestimmte Grenzamplitude zu begrenzen, wobei vorzugsweise
- die Grenzamplitude als frequenzabhängiger Amplitudenverlauf vorgegeben wird.

10. Verfahren nach einem der vorstehenden Ansprüche,
**dadurch gekennzeichnet, dass**
- die Windenergieanlage (100) einen Synchrongenerator (302) aufweist und
- die Leistungseinheit (310) einen Gleichrichter und einen Hochsetzsteller oder einen gesteuerten Gleichrichter (310) aufweist, und
- zum Ansteuern des Generators (302) zum Steuern der vom Generator (302) abgegebenen elektrischen Leistung und/oder zum Steuern des Generatordrehmomentes der Hochsetzsteller oder der gesteuerte Gleichrichter (310) verwendet wird, wobei vorzugsweise
- der Synchrongenerator (302) als fremderregter Synchrongenerator ausgebildet ist und die Leistungseinheit einen Erregersteller, insbesondere Gleichstromsteller, umfasst und damit einen Erregerstrom des Synchrongenerators (302) steuert.

11. Windenergieanlage (100) zum Einspeisen elektrischer Leistung in ein elektrisches Versorgungsnetz (120), umfassend:
- einen Turm (102) mit darauf drehbar angeordneter Gondel (104),
- einen durch Wind antreibbaren aerodynamischen Rotor (106),
- einen mit dem aerodynamischen Rotor (106) gekoppelten Generator (310) zum Erzeugen elektrischer Leistung aus Wind,
- eine Leistungseinheit (310) zum Ansteuern des Generators (302) zum Steuern einer vom Generator (302) abgegebenen elektrischen Leistung und/oder zum Steuern eines Generatordrehmomentes und
- eine Einspeiseeinheit (101) zum Einspeisen der vom Generator (302) abgegebenen elektrischen Leistung oder eines Teils davon in das elektrische Versorgungsnetz (120),
- eine Steuereinheit (314) zum Steuern der Windenergieanlage (100) so, dass in einem Normalbetrieb in Abhängigkeit des Windes eine elektrische Einspeiseleistung in das elektrische Versorgungsnetz (120) eingespeist wird, wobei die Steuereinheit (314) dazu vorbereitet ist,
- ein Verändern der elektrischen Einspeiseleistung in Abhängigkeit eines Netzzustands und/oder einer Netzanforderung des elektrischen Versorgungsnetzes (120) zu steuern, wobei
- das Verändern der elektrischen Einspeiseleistung so geführt wird, dass eine vorgebbare mechanische, insbesondere momentane Belastungsgrenze der Windenergieanlage (100) eingehalten wird, wobei
- zur Steuerung des Generators (302) ein Generator-Regelkreis gebildet wird, der wenigstens den Generator (302) und die Leistungseinheit (310) umfasst,
- für den Generator-Regelkreis eine Regelungsdynamik vorgegeben wird, und in dem Generator-Regelkreis eine Eigenschaft oder ein Verhalten des elektrischen Versorgungsnetzes (120) beinhaltet ist, insbesondere eine Eigenfrequenz und/oder eine Schwingung des elektrischen Versorgungsnetzes (120).

12. Windenergieanlage (100) nach Anspruch 11,
**dadurch gekennzeichnet, dass**
die Windenergieanlage (100), insbesondere die Steuereinheit (314) dazu vorbereitet ist, ein Verfahren gemäß einem der Ansprüche 1 bis 11 auszuführen, wobei insbesondere ein mechanisches Modell der Windenergieanlage (100) in der Windenergieanlage (100) implementiert ist, insbesondere in der Steuereinheit (314).

13. Windpark (112) mit mehreren Windenergieanlagen (100) gemäß Anspruch 11 oder 12.

14. Windpark nach Anspruch 13,
**dadurch gekennzeichnet, dass**
- der Windpark (112) an einem Netzanschlusspunkt (118) mit dem elektrischen Versorgungsnetz (120) verbunden ist, um eine elektrische Parkleistung in das elektrische Versorgungsnetz (120) einzuspeisen,
- eine zentrale Parksteuerung (130) vorgesehen ist, um die Windenergieanlagen (100) so zu koordinieren, dass die elektrische Parkleistung am Netzanschlusspunkt (118) in das elektrische Versorgungsnetz (120) eingespeist wird, insbesondere unter Berücksichtigung der jeweiligen vorgebbaren Belastungsgrenze jeder Windenergieanlage (100).
